# EUROPEAN PATENT APPLICATION

(11) **EP 4 607 638 A1**
(43) Date of publication of application: **27.08.2025**
(21) Application number: 25160108.4
(22) Date of filing: 25.02.2025
(51) Int. Cl.: H01M 10/04, H01M 50/107, H01M 50/148, H01M 50/179, H01M 50/528, H01M 50/538, H01M 50/54

(54) **BATTERY CELL, METHOD OF MANUFACTURING SAME AND BATTERY MODULE**

(30) Priority: 26.02.2024 KR 20240027547; 03.09.2024 KR 20240119588
(71) Applicant: SK On Co., Ltd., Seoul 03161 (KR)
(72) Inventor: PAK, Byeong Jun, 34124 Daejeon (KR); JU, Seung Hoon, 34124 Daejeon (KR)
(74) Representative: Stolmár & Partner Patentanwälte PartG mbB

(57) **Abstract**

A battery cell includes a cell case including a side wall forming an accommodation space therein and a top plate having a through-hole formed therein, an electrode terminal coupled to the through-hole and having a coupling groove formed in a bottom portion of the electrode terminal, an electrode assembly disposed in the accommodation space of the cell case, and a first current collector electrically connecting the electrode terminal and the electrode assembly. The first current collector includes a connection terminal having a protrusion screw-coupled to the coupling groove, and the coupling groove includes a second screw thread coupled to a first screw thread formed on an outer peripheral surface of the protrusion.

## Description

### TECHNICAL FIELD

The disclosure and implementations disclosed in this patent document generally relate to a battery cell (a secondary battery) capable of being charged and discharged electrically, a method of manufacturing the battery cell, and a battery module.

### BACKGROUND

Secondary battery cells, unlike primary batteries, have the convenience of being able to be charged with and discharged of electricity, and are thus receiving much attention as power sources for various mobile devices, electric vehicles, energy storage devices, and the like.

Secondary battery cells may be manufactured as pouch-type cells or can-type cells. Pouch-type cells have a structure in which the electrode assembly is accommodated inside a flexible cell case (pouch). Can-type cells have a structure in which the electrode assembly is accommodated inside a rigid cell case (can) and may be composed of cylindrical cells, prismatic cells, coin-type cells, etc.

### SUMMARY

The present disclosure may be implemented in some embodiments to provide a secondary battery cell including an electrode assembly and a cell case accommodating the electrode assembly. The electrode assembly is connected to a current collector, and the current collector may be welded to an electrode terminal of the battery cell and electrically connected to the electrode terminal.

In a related art battery cell, after combining a current collector and an electrode assembly, the electrode assembly is inserted into a cell case, a horn for ultrasonic welding is inserted into a hollow portion formed in the center of the electrode assembly, and the current collector and the electrode terminal are ultrasonically welded to electrically connect the current collector and the electrode terminal.

However, when ultrasonic welding is performed through the hollow portion of the electrode assembly while the electrode assembly is inserted into the cell case, foreign welding substances such as fumes or spatter are formed inside the battery cell, so there may be a problem in that the battery cell is defective due to the foreign substances.

According to an aspect of the present disclosure, a battery cell, a manufacturing method thereof, and a battery module in which defects caused by foreign substances occurring during the coupling of an electrode terminal and a current collector may be reduced may be provided.

According to an aspect of the present disclosure, a battery cell, a manufacturing method thereof, and a battery module in which an electrode terminal and a current collector may be electrically connected without welding may be provided.

According to an aspect of the present disclosure, a battery cell, a manufacturing method thereof, and a battery module in which an electrical connection process between an electrode terminal and a current collector may be simplified may be provided.

According to an aspect of the present disclosure, a battery cell, a manufacturing method thereof, and a battery module capable of stably maintaining coupling between an electrode terminal and a current collector may be provided.

According to an aspect of the present disclosure, a battery cell, a manufacturing method thereof, and a battery module capable of improving the rigidity of an electrode terminal may be provided.

According to an aspect of the present disclosure, a battery cell, a manufacturing method thereof, and a battery module capable of preventing foreign substances (impurities) caused by welding of an electrode terminal and a current collector from affecting internal configurations of the battery cell may be provided.

According to an aspect of the present disclosure, a battery cell, a manufacturing method thereof, and a battery module capable of preventing an electrode assembly from being damaged by welding heat may be provided.

The battery cell and/or battery module of the present disclosure may be widely applied to devices in green technology fields such as electric vehicles, battery charging stations, and other solar power generation and wind power generation technologies using batteries. In addition, the battery cell and/or battery module of the present disclosure may be used in eco-friendly electric vehicles, hybrid vehicles, and the like to ameliorate the effects of climate change by suppressing air pollution and greenhouse gas emissions.

In some embodiments of the present disclosure, a battery cell includes a cell case including a side wall forming an accommodation space therein and a top plate having a through-hole formed therein; an electrode terminal coupled to the through-hole and having a coupling groove formed in a bottom portion of the electrode terminal; an electrode assembly disposed in the accommodation space of the cell case; and a first current collector electrically connecting the electrode terminal and the electrode assembly. The first current collector includes a connection terminal having a protrusion screw-coupled to the coupling groove, and the coupling groove includes a second screw thread coupled to a first screw thread formed on an outer peripheral surface of the protrusion.

In a preferred embodiment, the protrusion of the connection terminal may be configured to move along an axial direction of the cell case by a relative rotation of the first screw thread and the second screw thread and may be coupled to the coupling groove of the electrode terminal.

In a preferred embodiment, the first current collector may include a support groove formed on a bottom surface, and the support groove may support an installation tool during a relative rotation between the connection terminal and the electrode terminal.

In a preferred embodiment, the coupling groove of the electrode terminal may include a contact surface on an inner top surface thereof, contacting the connection terminal, and the connection terminal may be disposed to contact the contact surface.

In a preferred embodiment, a thickness of the connection terminal at a connection portion between the electrode terminal and the connection terminal may have a value greater than or equal to a thickness of the electrode terminal.

In a preferred embodiment, the first screw thread of the connection terminal and the second screw thread of the coupling groove may be coupled to each other in a pressurized state.

In a preferred embodiment, an average diameter of the first screw thread may have a value equal to or greater than an average diameter of the second screw thread.

In a preferred embodiment, the first screw thread of the connection terminal and the second screw thread of the coupling groove may be provided with a loosening prevention member therebetween preventing loosening of a screw-coupling.

In a preferred embodiment, the protrusion may be provided as a solid type, an internal portion of which is filled.

In a preferred embodiment, the first current collector may further include a current collecting plate electrically connected to a first electrode tab of the electrode assembly, and the current collecting plate may be connected to the connection terminal.

In a preferred embodiment, the connection terminal may further include a support portion coupled to the current collecting plate, and the protrusion may extend from the support portion and may have a shape passing through an opening formed in the current collecting plate.

In a preferred embodiment, the current collecting plate and the connection terminal may be formed integrally.

In a preferred embodiment, the cell case may have a circular cross-sectional shape, the through-hole may be formed in a center of the top plate, and the electrode terminal may be riveted to the through-hole of the cell case.

In a preferred embodiment, the side wall may have a tube shape, and the top plate may have a plate shape covering a top side of the accommodation space of the cell case. The side wall and the top plate may be formed integrally.

The battery cell according to a preferred embodiment may further include a cap plate covering a bottom side of the accommodation space of the cell case, and the cap plate may be crimping-coupled or welded to the cell case.

In some embodiments of the present disclosure, a method of manufacturing a battery cell includes riveting an electrode terminal to a through-hole formed in a top plate of a cell case having an open bottom side; electrically connecting a first current collector to an electrode assembly; inserting the electrode assembly into an accommodation space of the cell case; and coupling the electrode terminal and the first current collector. The first current collector includes a connection terminal having a protrusion screw-coupled to a coupling groove of the electrode terminal. The coupling groove includes a second screw thread to which a first screw thread formed on an outer peripheral surface of the protrusion is coupled. The coupling is performed by screw-coupling the electrode terminal and the protrusion by relatively rotating the electrode terminal and the protrusion.

In a preferred embodiment, the coupling may be performed by inserting an installation tool into a hollow portion formed in a center of the electrode assembly to relatively rotate the electrode terminal and the protrusion.

In a preferred embodiment, the first current collector may include a support groove formed in a bottom surface of the first current collector, and the coupling may be performed in a state where the installation tool is supported by the support groove.

In a preferred embodiment, the first current collector may further include a current collecting plate electrically connecting a first electrode tab of the electrode assembly and the connection terminal, and the current collecting plate and the connection terminal may be manufactured separately and then coupled by welding or may be formed integrally by forging.

In some embodiments of the present disclosure, a battery module includes a plurality of battery cells; and a module housing accommodating the plurality of battery cells. At least one of the plurality of battery cells includes a cell case including a side wall forming an accommodation space therein and a top plate having a through-hole formed therein; an electrode terminal coupled to the through-hole and having a coupling groove formed in a bottom portion of the electrode terminal; an electrode assembly disposed in the accommodation space of the cell case; and a first current collector electrically connecting the electrode terminal and the electrode assembly. The first current collector includes a connection terminal having a protrusion screw-coupled to the coupling groove. The coupling groove includes a second screw thread coupled to a first screw thread formed on an outer peripheral surface of the protrusion.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment.
FIG. 2 is an exploded perspective view of the battery cell illustrated in FIG. 1.
FIG. 3 is a cross-sectional view taken along line I-I' of FIG. 2.
FIG. 4 is a cross-sectional view and a partially enlarged view illustrating a portion where an electrode terminal is installed in the cross-sectional view illustrated in FIG. 3.
FIG. 5 is a cross-sectional view illustrating a state before an electrode terminal and a first current collector are coupled.
FIG. 6 is a perspective view illustrating a connection terminal and an installation tool.
FIG. 7 is a bottom view illustrating a bottom surface of a first current collector.
FIG. 8 is a cross-sectional view illustrating a modified embodiment of the battery cell illustrated in FIG. 4.
FIG. 9 is a perspective view illustrating a modified embodiment of the first current collector.
FIG. 10 is a cross-sectional view illustrating a state in which the first current collector illustrated in FIG. 9 is applied to the cross-sectional view of FIG. 4.
FIG. 11 is a cross-sectional view illustrating a modified embodiment of the battery cell of FIG. 3.
FIG. 12 is a cross-sectional view illustrating another modified embodiment of the battery cell of FIG. 3.
FIG. 13 is a flow chart illustrating a method of manufacturing a battery cell according to a preferred embodiment.
FIGS. 14A to 14E are cross-sectional views illustrating a method of manufacuring a battery cell.
FIG. 15 is a perspective view of a battery module according to a preferred embodiment.

### DETAILED DESCRIPTION

Features of the present disclosure disclosed in this patent document are described by example embodiments with reference to the accompanying drawings.

The same reference numbers or symbols described in each drawing attached to this specification represent parts or components that perform substantially the same functions. For the convenience of explanation and understanding, the same reference numbers or symbols may be used in different embodiments. In detail, even if components with the same reference numbers are depicted in multiple drawings, they do not mean that all of the multiple drawings represent a preferred embodiment.

In the following description, the singular expression includes the plural expression unless the context clearly indicates otherwise. It should be understood that the terms such as "include" or "comprise" are intended to specify the presence of features, numbers, steps, operations, components, parts, or combinations thereof described in the specification, but do not preclude the possibility of the presence or addition of one or more other features, numbers, steps, operations, components, parts, or combinations thereof.

In addition, in the following description, the expressions such as "upper side," "upper portion," "lower side," "lower portion," "side," "side surface," "front," "rear," and the like are expressed based on the direction depicted in the drawings, and it is noted in advance that they may be expressed differently if the direction of the corresponding object changes.

In addition, terms including ordinal numbers such as "first," "second," and the like may be used in the present specification and claims to distinguish between components. These ordinal numbers are used to distinguish between identical or similar components, and the meaning of the terms should not be limited due to the use of these ordinals. For example, the components associated with these ordinals should not be limited in their order of use or arrangement, and the like by their numbers. If necessary, respective ordinal numbers may be used interchangeably.

Hereinafter, the present disclosure will be described in detail with reference to the attached drawings. However, this is merely an example, and the present disclosure is not limited to the specific embodiments described as examples.

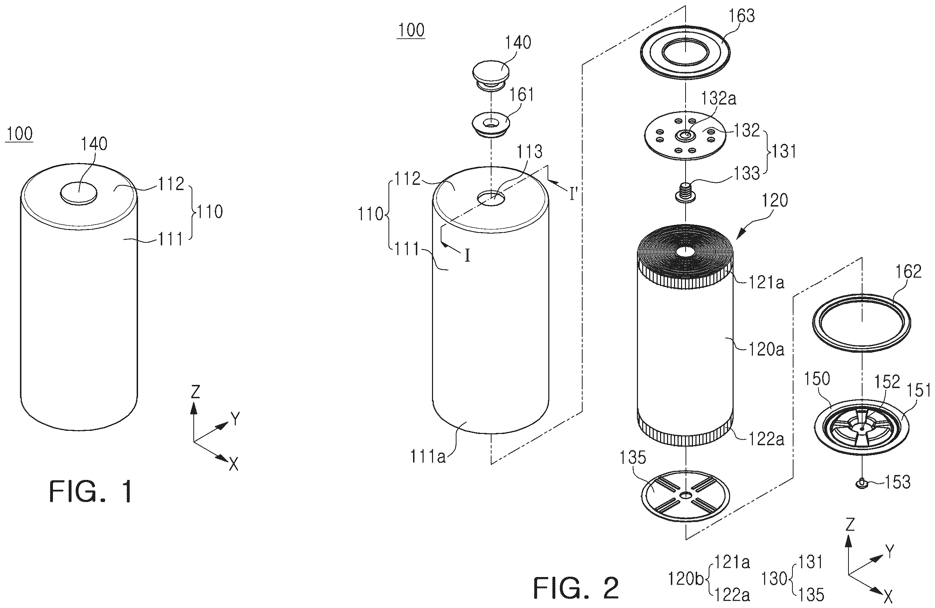

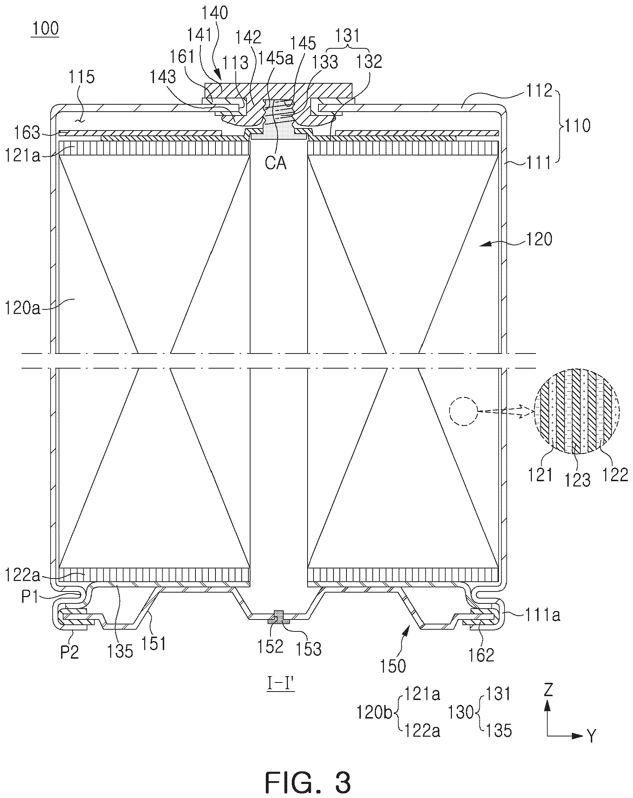

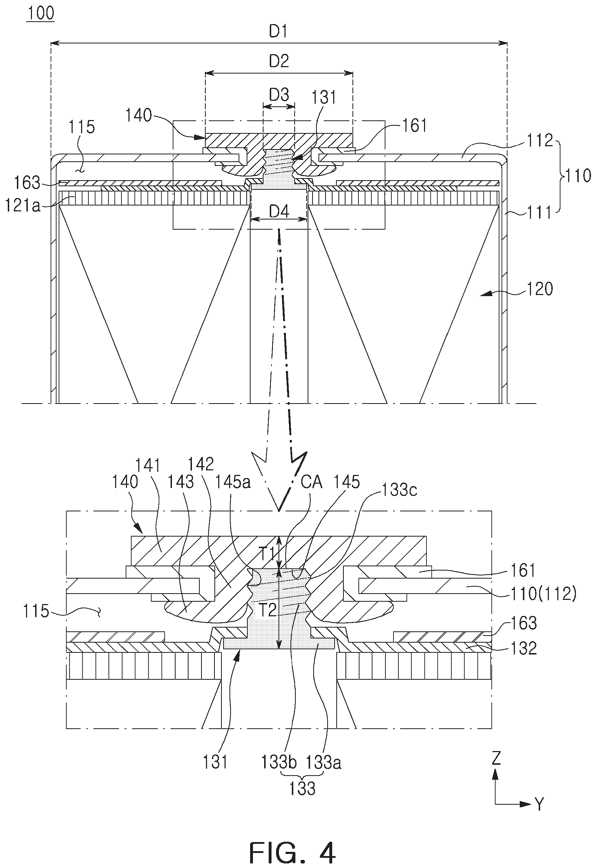

FIG. 1 is a perspective view of a battery cell (100) according to one embodiment. FIG. 2 is an exploded perspective view of the battery cell (100) illustrated in FIG. 1. FIG. 3 is a cross-sectional view taken along line I-I' of FIG. 2. FIG. 4 is a cross-sectional view and a partially enlarged view illustrating a portion in which an electrode terminal (140) is installed in the cross-sectional view illustrated in FIG. 3.

Referring to FIGS. 1 to 4, a battery cell (100) according to a preferred embodiment includes: a cell case (110) including a side wall (111) forming an accommodation space (115) therein and a top plate (112) having a through-hole (113) formed therein; an electrode terminal (140) coupled to the through-hole (113) and having a coupling groove (145) formed in a bottom portion of the electrode terminal (140); an electrode assembly (120) disposed in the accommodation space (115) of the cell case (110); and a first current collector (131) electrically connecting the electrode terminal (140) and the electrode assembly (120). The first current collector (131) may include a connection terminal (133) having a protrusion (133b) that is screw-coupled to a coupling groove (145). The coupling groove (145) may include a second screw thread (145a) to which a first screw thread (133c) formed on an outer peripheral surface of the protrusion (133b) is coupled.

The battery cell (100) according to the present disclosure may be configured as a cylindrical cell, but is not limited thereto. In the present disclosure, a battery cell (100) according to a preferred embodiment will be described using a cylindrical cell as an example.

The cell case (110) may include a side wall (111) that forms an accommodation space (115) therein, and a top plate (112) in which a through-hole (113) is formed. The accommodation space (115) may be formed by the side wall (111) and the top plate (112) of the cell case (110). The cell case (110) may have a cylindrical shape with one side (for example, the bottom side) open. The cell case (110) may have a hollow cylindrical shape including a circular cross section.

The side wall (111) may have a tube shape, and the top plate (112) may have a plate shape covering the top side of the accommodation space (115).

The side wall (111) may have a circular tube shape. The top plate (112) may have an overall flat plate shape. The thicknesses of the top plate (112) and the side wall (111) in the cell case (110) may be changed in various ways. For example, the top plate (112) and the side wall (111) may have the same thickness, and it is also possible for the thickness of the top plate (112) to have a value greater than the thickness of the side wall (111).

The cell case (110) may include a metal material such as aluminum or an aluminum alloy, but the material of the cell case (110) may be variously changed.

As illustrated in FIGS. 1 to 4, the side wall (111) and the top plate (112) of the cell case (110) may be formed integrally. For example, the cell case (110) may be manufactured in a shape in which the side wall (111) and the top plate (112) are formed integrally by deep drawing a metal sheet. When the cell case (110) is formed integrally, the process of joining the side wall (111) and the top plate (112) is not required, so the manufacturing of the cell case (110) and/or the battery cell (100) may be facilitated and the workability may be improved.

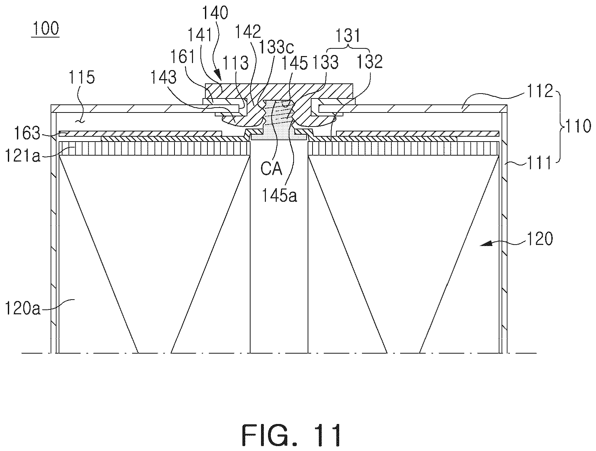

However, the cell case (110) of the present disclosure is not limited to a configuration in which the side wall (111) and the top plate (112) are formed integrally, and the side wall (111) and the top plate (112) may also be manufactured separately and then coupled or joined to each other by welding or the like (see FIG. 11).

A through-hole (113) may be formed in the top plate (112) of the cell case (110). The through-hole (113) may be provided for coupling the electrode terminal (140). The cell case (110) has a circular cross-sectional shape, and the through-hole (113) may be formed in the center of the top plate (112). In this case, the electrode terminal (140) coupled to the through-hole (113) may be disposed at the center of the top plate (112).

The electrode terminal (140) may be connected to the through-hole (113). At least a part of the electrode terminal (140) may be exposed to the outside of the cell case (110). The electrode terminal (140) passes through the through-hole (113) formed in the top plate (112) of the cell case (110) and at least a part of the electrode terminal may be exposed to the outside of the cell case (110). When the first current collector (131) is connected to the positive electrode (cathode), the electrode terminal (140) may correspond to the positive electrode terminal (cathode terminal), and vice versa.

The electrode terminal (140) may be riveted to the through-hole (113) of the cell case (110). The electrode terminal (140) may be connected to the top plate (112) by riveting while being inserted into the through-hole (113) of the top plate (112). The electrode terminal (140) may be riveted to the top plate (112) of the cell case

(110). The electrode terminal (140) may have a rivet shape overall.

The electrode terminal (140) may include a first portion (141) disposed on the top side of the top plate (112), a second portion (142) extending from the first portion (141) to the bottom side and passing through the through-hole (113), and a third portion (143) extending from the second portion (142) and disposed on the bottom side of the top plate (112). The first portion (141) may be disposed on the outside of the cell case (110), and the third portion (143) may be disposed in the accommodation space (115) of the cell case (110). The third portion (143) may have a shape that is deformed by pressure and extends radially outwardly of the cell case (110). The top plate (112) may be disposed between the first portion (141) and the third portion (143). The outer diameter (D2) of the first portion (141) and the outer diameter of the third portion (143) may have a value greater than the diameter of the through-hole (113), and the outer diameter of the second portion (142) may have a value smaller than the diameter of the through-hole (113). The outer diameter (D2) of the first portion (141) may have a value smaller than the outer diameter (D1) of the cell case (110). The outer diameter (D2) of the first portion (141) may be set in consideration of the space (area) for welding with the bus bar connected to the first portion (141).

A coupling groove (145) may be formed at the bottom of the electrode terminal (140). The coupling groove (145) may have a groove shape that is sunken from the bottom surface of the electrode terminal (140) toward the top side. The coupling groove (145) may have a shape that does not penetrate the electrode terminal (140). The coupling groove (145) of the electrode terminal (140) may include a contact surface (CA) formed on the inner top surface. The contact surface (CA) may contact the top surface of the connection terminal (133).

At least a part of the connection terminal (133) of the first current collector (131) may be inserted into the coupling groove (145). The protrusion (133b) of the connection terminal (133) may be inserted into the coupling groove (145) of the electrode terminal (140).

The protrusion (133b) of the connection terminal (133) may be screw-coupled to the coupling groove (145) of the electrode terminal (140). The coupling groove (145) may include a second screw thread (145a) to which a first screw thread (133c) formed on the outer peripheral surface of the protrusion (133b) is coupled. The second screw thread (145a) may have a spiral shape in space. The second screw thread (145a) of the coupling groove (145) may be screw-coupled to the first screw thread (133c) of the protrusion (133b). The second screw thread (145a) of the coupling groove (145) may be provided as a female screw, and the first screw thread (133c) of the protrusion (133b) may be provided as a male screw. The protrusion (133b) of the connection terminal (133) is provided to the first current collector (131), so that the first current collector (131) may be electrically connected to the electrode terminal (140) through the protrusion (133b) of the connection terminal (133). For example, an electrical connection may be established between the electrode terminal (140) and the first current collector (131) by the screw connection of the first screw thread (133c) and the second screw thread (145a).

The battery cell (100) according to a preferred embodiment may additionally include a first gasket (161) that is disposed between the electrode terminal (140) and the through-hole (113) and has electrical insulation.

The first gasket (161) may be disposed between the electrode terminal (140) and the top plate (112) to insulate between the electrode terminal (140) and the top plate (112). The first gasket (161) may include an electrically insulating material. The first gasket (161) may serve as a sealing member that seals between the electrode terminal (140) and the top plate (112).

The electrode terminal (140) may be inserted into the through-hole (113) from the outside of the top plate (112). Since the outer diameter (D2) of the first portion (141) of the electrode terminal (140) is larger than the diameter of the through-hole (113), the first portion (141) of the electrode terminal (140) may be disposed on the outer side of the top plate (112). The third portion (143) is deformed by riveting, and thus the electrode terminal (140) may be fixed to the top plate (112).

If the riveting is performed while the first gasket (161) is disposed on the outer periphery of the electrode terminal (140), the first gasket (161) may be disposed between the electrode terminal (140) and the top plate (112). The first gasket (161) may seal and/or insulate between the electrode terminal (140) and the top plate (112).

The electrode assembly (120) may be disposed in the accommodation space (115) of the cell case (110). The electrode assembly (120) may include a positive electrode (cathode), a negative electrode (anode), and a separator (123). One of the positive electrode and the negative electrode may correspond to the first electrode (121), and the other may correspond to the second electrode (122). The positive electrode and the negative electrode may each include a current collecting foil (or metal foil) and a composite layer applied to at least one surface of the current collecting foil. The composite layer may include an active material. The separator (123) may be interposed between the positive electrode and the negative electrode to electrically insulate the positive electrode and the negative electrode. The positive electrode, the negative electrode, and the separator (123) may be repeatedly disposed to form the electrode assembly (120). As an example, the electrode assembly (120) may have a winding shape in which the positive electrode, the separator (123), and the negative electrode are stacked and wound. However, the electrode assembly (120) is not limited to the winding structure. For example, the electrode assembly (120) may also have a stacking shape, a zigzag-folding shape, and a stack-folding shape.

The electrode assembly (120) may include a first electrode (121) and a second electrode (122) with different polarities. As an example, the first electrode (121) may be provided as a positive electrode (cathode) and the second electrode (122) may be provided as a negative electrode (anode), or vice versa.

The electrode assembly (120) may include a body (120a) in which a first electrode (121) and a second electrode (122) are arranged with a separator (123) therebetween, and an electrode tab (120b) extended from the first electrode (121) or the second electrode (122). The body (120a) may include a coating portion on which an active material is applied, and the electrode tab (120b) may include a non-coating portion on which an active material is not applied. The electrode tab (120b) may have a shape that is overlapped or laid down in a certain shape.

The electrode tab (120b) may include a first electrode tab (121a) extended from the first electrode (121) and a second electrode tab (122a) extended from the second electrode (122). The first electrode tab (121a) may include a non-coating portion of the first electrode (121), and the second electrode tab (122a) may include a non-coating portion of the second electrode (122).

The electrode tab (120b) may be electrically connected to a current collector (130). The current collector (130) may include a first current collector (131) and a second current collector (135). The first electrode tab (121a) may be electrically connected to the first current collector (131). As an example, the first electrode tab (121a) and the first current collector (131) may be electrically connected to each other by welding or the like. The second electrode tab (122a) may be electrically connected to at least one of the second current collector (135), the cap plate (150), or the side wall (111) of the cell case (110). As an example, the second electrode tab (122a) and the second current collector (135) may be electrically connected to each other by contacting each other, and may also be coupled to each other by welding such as ultrasonic welding or laser welding. However, the coupling method of the second electrode tab (122a) and the second current collector (135) is not limited thereto.

The first current collector (131) may electrically connect the electrode terminal (140) and the electrode assembly (120).

The bottom side of the first current collector (131) may be electrically connected to the first electrode tab (121a), and the top side of the first current collector (131) may be electrically connected to the electrode terminal (140). As an example, the first current collector (131) and the first electrode tab (121a) may be coupled to each other by welding such as ultrasonic welding, laser welding, or resistance welding, but the coupling method is not limited thereto. The first current collector (131) and the electrode terminal (140) may be coupled to each other by welding such as laser welding.

The first current collector (131) may include a connection terminal (133) having a protrusion (133b) that is screw-coupled to the coupling groove (145) of the electrode terminal (140). The protrusion (133b) of the connection terminal (133) may be inserted into the coupling groove (145) formed in the electrode terminal (140).

The protrusion (133b) of the connection terminal (133) may have a cylindrical shape with a circular cross-section as a whole. The protrusion (133b) of the connection terminal (133) and the coupling groove (145) of the electrode terminal (140) may have shapes corresponding to each other. For example, when the protrusion (133b) includes a cylindrical shape, the coupling groove (145) may include a circular cross-section.

The protrusion (133b) of the connection terminal (133) may have a first screw thread (133c) formed on the outer peripheral surface. The first screw thread (133c) may have a spiral shape in space. The first screw thread (133c) of the protrusion (133b) may be screw-coupled to the second screw thread (145a) of the coupling groove (145). The first screw thread (133c) of the protrusion (133b) may be provided as a male screw, and the second screw thread (145a) of the coupling groove (145) may be provided as a female screw. The electrode terminal (140) may be electrically connected to the first current collector (131) through the protrusion (133b) of the connection terminal (133). An electrical connection between the first current collector (131) and the electrode terminal (140) may be formed by screw-connecting the first screw thread (133c) and the second screw thread (145a).

As described above, the coupling groove (145) of the electrode terminal (140) may include a contact surface (CA) on the inner top surface that contacts the connection terminal (133). The connection terminal (133) may be disposed to contact the contact surface (CA). In this case, the electrode terminal (140) and the connection terminal (133) may be electrically connected not only through the first screw thread (133c) and the second screw thread (145a), but also through the contact surface (CA). Therefore, the electrical connection between the electrode terminal (140) and the first current collector (131) may be implemented more stably.

The outer diameter (D3) of the protrusion (133b) may be defined as the outer diameter of the second screw thread (145a) formed in the protrusion (133b). The outer diameter (D3) of the protrusion (133b) may be set to a value that may be screw-coupled to the coupling groove (145).

The first current collector (131) may additionally include a current collecting plate (132) electrically connected to the first electrode tab (121a) of the electrode assembly (120). The current collecting plate (132) may be connected to a connection terminal (133). For example, the first current collector (131) may include a current collecting plate (132) electrically connected to the first electrode tab (121a) and a connection terminal (133) connected to the current collecting plate (132).

The current collecting plate (132) of the first current collector (131) may be welded to the first electrode tab (121a). The current collecting plate (132) may be coupled to each other by laser welding, ultrasonic welding, resistance welding, or the like while being disposed to be in contact with the first electrode tab (121a).

The connection terminal (133) may include a protrusion (133b) that is fit-fitted into a coupling groove (145) of the electrode terminal (140). The connection terminal (133) may further include a support portion (133a) that is coupled to the current collecting plate (132). For example, the connection terminal (133) may include a support portion (133a) that is coupled to the current collecting plate (132), and a protrusion (133b) that extends from the support portion (133a) to a top side and is inserted into the coupling groove (145) of the electrode terminal (140). The support portion (133a) and the protrusion (133b) may be formed integrally. The support portion (133a) and the protrusion (133b) may be manufactured integrally by forging, press processing, or the like.

The protrusion (133b) of the connection terminal (133) may have a shape that extends from the support portion (133a) and passes through the opening (132a) formed in the current collecting plate (132). The connection terminal (133) may be combined with the current collecting plate (132) in a state where the protrusion (133b) is disposed to pass through the opening (132a) of the current collecting plate (132). The outer diameter (D4) of the support portion (133a) may have a value larger than the diameter of the opening (132a) and the outer diameter (D3) of the protrusion (133b).

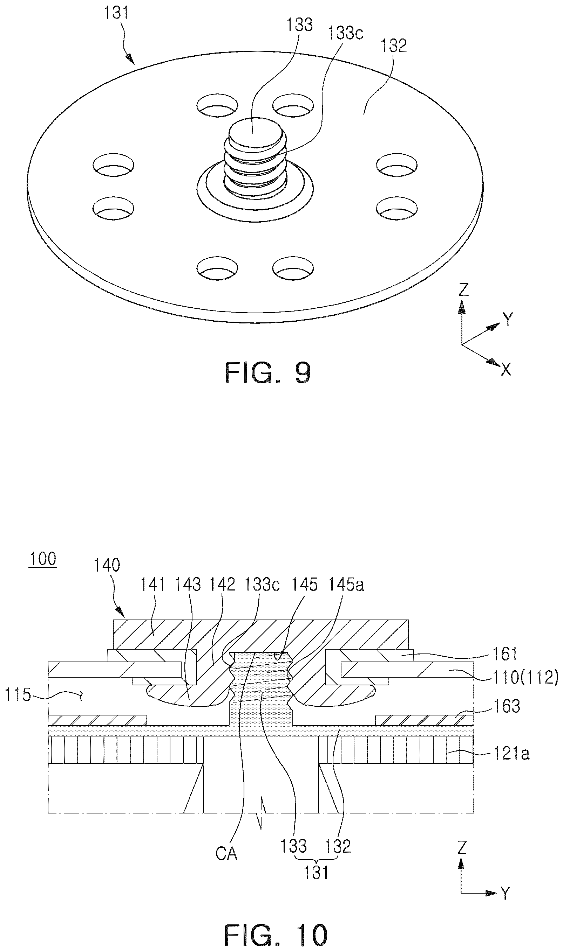

The current collecting plate (132) and the connection terminal (133) may be manufactured separately and then combined with each other. The current collecting plate (132) may have a plate shape that is relatively thinner than the connection terminal (133), and the connection terminal (133) may have a cylindrical shape that is relatively thicker than the current collecting plate (132). Therefore, if the current collector plate (132) and the connection terminal (133) are manufactured separately, respective manufacturing thereof may be easily manufactured, and the design freedom for the thickness (T2) of the connection terminal (133) may be improved. The connection terminal (133) and the current collector plate (132) may be joined by welding. However, the method of coupling the connection terminal (133) and the current collector plate (132) is not limited thereto, and other coupling methods such as a fitting joint may be applied. Meanwhile, in the present disclosure, the current collector plate (132) and the connection terminal (133) are not limited to a separate structure, and they may also have an integrated structure (see FIGS. 9 and 10).

The connection terminal (133) of the first current collector (131) may be screw-coupled with the electrode terminal (140). The protrusion (133b) of the connection terminal (133) may be configured to be move along an axial direction (Z) of the cell case (110) by the relative rotation of the first screw thread (133c) and the second screw thread (145a) to be coupled to the coupling groove (145) of the electrode terminal (140).

For example, the relative rotation of the first screw thread (133c) and the second screw thread (145a) may be implemented by rotating the connection terminal (133) of the first current collector (131) while the cell case (110) and the electrode terminal (140) are fixed, or may be implemented by rotating the cell case (110) and the electrode terminal (140) while the first current collector (131) to which the electrode assembly (120) is coupled is fixed.

According to a preferred embodiment, the electrode terminal (140) and the first current collector (131) may be electrically connected by screw connection without welding. Therefore, it is possible to improve defects caused by foreign substances that occur during welding of the electrode terminal (140) and the first current collector (131). For example, compared to the conventional technology of welding the electrode terminal (140) and the first current collector (131), the embodiment of the present disclosure may prevent foreign substances (impurities) caused by welding of the electrode terminal (140) and the first current collector (131) from affecting the internal configuration of the battery cell (100), and may prevent the electrode assembly (120) from being damaged by welding heat. According to a preferred embodiment, since welding is not performed inside the cell case (110), dust collection work is not required for the inside of the cell case (110), and costs due to dust collection may be reduced.

According to a preferred embodiment, since the electrode terminal (140) and the first current collector (131) may be electrically connected by screw coupling, the electrical connection process between the electrode terminal (140) and the first current collector (131) may be simplified.

The protrusion (133b) may be provided as a solid type, an internal portion of which is filled. The connection terminal (133) may have a shape that is not hollow. In this case, since the protrusion (133b) may fill the coupling groove (145) formed in the electrode terminal (140), the rigidity of the electrode terminal (140) may be improved. For example, even when the coupling groove (145) is formed in the electrode terminal (140), the rigidity of the electrode terminal (140) may be secured by the connection terminal (133) inserted into the coupling groove (145).

At the connection portion between the electrode terminal (140) and the connection terminal (133), the thickness (T2) of the connection terminal (133) may have a value greater than or equal to the thickness (T1) of the electrode terminal (140). The connection portion between the electrode terminal (140) and the connection terminal (133) may be defined as a portion where a protrusion (133b) is combined with a coupling groove (145).

Since the electrode terminal (140) has a coupling groove (145) formed at the bottom, the thickness (T1) of the electrode terminal (140) at the connection portion where it is coupled with the connection terminal (133) may have a thinner shape than the surroundings.

Based on the coupling direction (for example, Z-axis direction) of the electrode terminal (140) and the connection terminal (133), the thickness (T2) of the connection terminal (133) at the connection portion between the electrode terminal (140) and the connection terminal (133) may have a value equal to or greater than the thickness (T1) of the electrode terminal (140). The thickness (T2) of the connection terminal (133) may be defined as the sum of the thicknesses of the protrusion (133b) and the support portion (133a).

Since the thickness (T2) of the connection terminal (133) has a value greater than or equal to the thickness (T1) of the electrode terminal (140), the heights of the first screw thread (133c) formed in the protrusion (133b) of the connection terminal (133) and the second screw thread (145a) formed in the coupling groove (145) of the electrode terminal (140) may be increased. Accordingly, a stable screw connection may be formed between the electrode terminal (140) and the connection terminal (133).

To reduce the thickness (T1) of the electrode terminal (140) and increase the screw connection force at the connection portion, the thickness (T2) of the connection terminal (133) may have a value greater than or equal to 1.2 times, 1.5 times, or 2 times the thickness (T1) of the electrode terminal (140).

The thickness (T1) of the electrode terminal (140) in the connection portion may have a thickness that prevents the connection terminal (133) from being exposed to the outside of the electrode terminal (140) when the electrode terminal (140) and the connection terminal (133) are screw-coupled. The thickness (T1) of the electrode terminal (140) may have a thickness that prevents the electrode terminal (140) from being damaged when the electrode terminal (140) is screw-coupled. For example, the thickness (T1) of the electrode terminal (140) in the connection portion may have a value of 0.5 mm or more and 5 mm or less. The thickness (T1) of the electrode terminal (140) in the connection portion may have a value of 0.5 mm or more, 1 mm or more, 1.5 mm or more, or 2 mm or more.

The thickness (T2) of the connection terminal (133) in the connection portion may be set to have a value that is greater than or equal to the thickness (T1) of the electrode terminal (140). For example, the thickness (T2) of the connection terminal (133) in the connection portion may have a value of 1.5 mm or more, 2 mm or more, 3 mm or more, 4 mm or more, or 5 mm or more. The thickness (T2) of the connection terminal (133) in the connection portion may have a value of 10 mm or less, 8 mm or less, 7 mm or less, 6 mm or less, or 5.5 mm or less.

To electrically insulate between the first current collector (131) and the cell case (110), an electrically insulated insulating member (163) may be disposed between the first current collector (131) and the cell case (110). As an example, the insulating member (163) may be disposed between the current collecting plate (132) and the top plate (112). The shape or arrangement position of the insulating member (163) may be changed in various ways.

The battery cell (100) according to a preferred embodiment may additionally include a cap plate (150) covering the bottom side of the accommodation space (115) of the cell case (110). The cap plate (150) may be crimping-coupled or welded to the cell case (110).

The cap plate (150) may cover the accommodation space (115) on the opposite side to the electrode terminal (140).

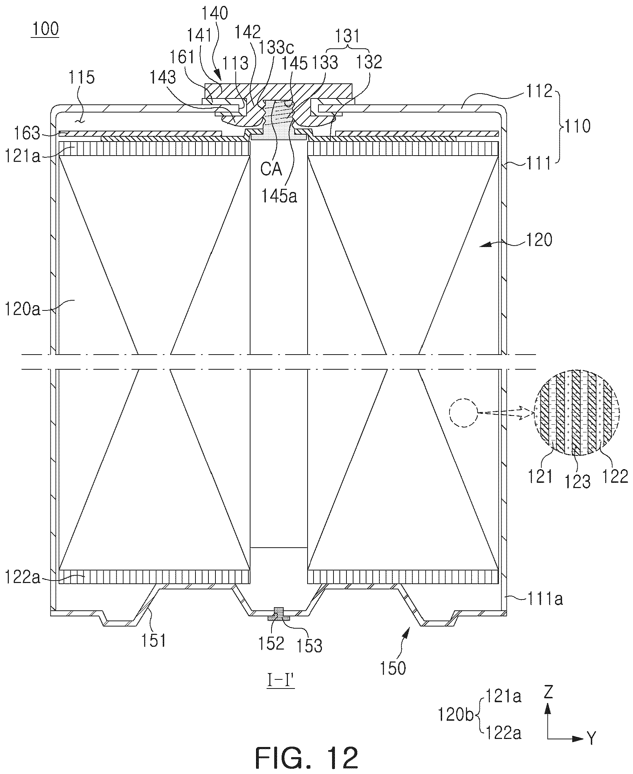

The cap plate (150) may be coupled to the side wall (111) of the cell case (110) by crimping, welding, or the like. As an example, as illustrated in FIG. 3, a beading process is performed on the open end (111a) of the side wall (111) of the cell case (110) to form a beading portion (P1), and then the cap plate (150) is disposed on the beading portion (P1) and the end (111a) of the side wall (111) and the cap plate (150) are crimped to form a crimping portion (P2). Alternatively, the cap plate (150) may also be coupled to the end (111a) of the side wall (111) by welding (see FIG. 12).

An injection port (152) for injecting an electrolyte into the inside of the cell case (110) may be formed in the cap plate (150). The injection port (152) may be formed in the center of the body (151) of the cap plate (150), but the position and size thereof may be changed in various ways. The injection port (152) may be sealed with an injection port plug (153) after the electrolyte is injected.

A second gasket (162) for sealing may be disposed between the cap plate (150) and the side wall (111) of the cell case (110). The second gasket (162) may serve as a sealing member that seals between the cap plate (150) and the side wall (111).

The battery cell (100) according to a preferred embodiment may additionally include a second current collector (135) electrically connected to the second electrode tab (122a) of the electrode assembly (120).

The top surface of the second current collector (135) may be configured to be joined or in contact with the second electrode tab (122a) to be electrically connected to the second electrode tab (122a). Welding may be used to join the second current collector (135) and the second electrode tab (122a). For example, the second current collector (135) and the second electrode tab (122a) may be joined by ultrasonic welding, laser welding, resistance welding, or the like. Alternatively, the second current collector (135) may be electrically connected to the second electrode tab (122a) without being joined to each other.

The second current collector (135) may be electrically connected to at least one of the cap plate (150) or the side wall (111) of the cell case (110). FIG. 3 illustrates a configuration in which the second current collector (135) is electrically connected to the cap plate (150) and the side wall (111) of the cell case (110). In this case, the cap plate (150) and the cell case (110) may have a second polarity. For example, if the second electrode tab (122a) is a negative tab (anode tab), the cap plate (150) and the cell case (110) may be charged as a negative electrode (anode). The object electrically connected to the second current collector (135) may be changed in various ways depending on the design specifications of the battery cell (100).

Meanwhile, a configuration in which the second current collector (135) is not disposed and the second electrode tab (122a) is directly electrically connected to the cap plate (150) may also be provided (see FIG. 12).

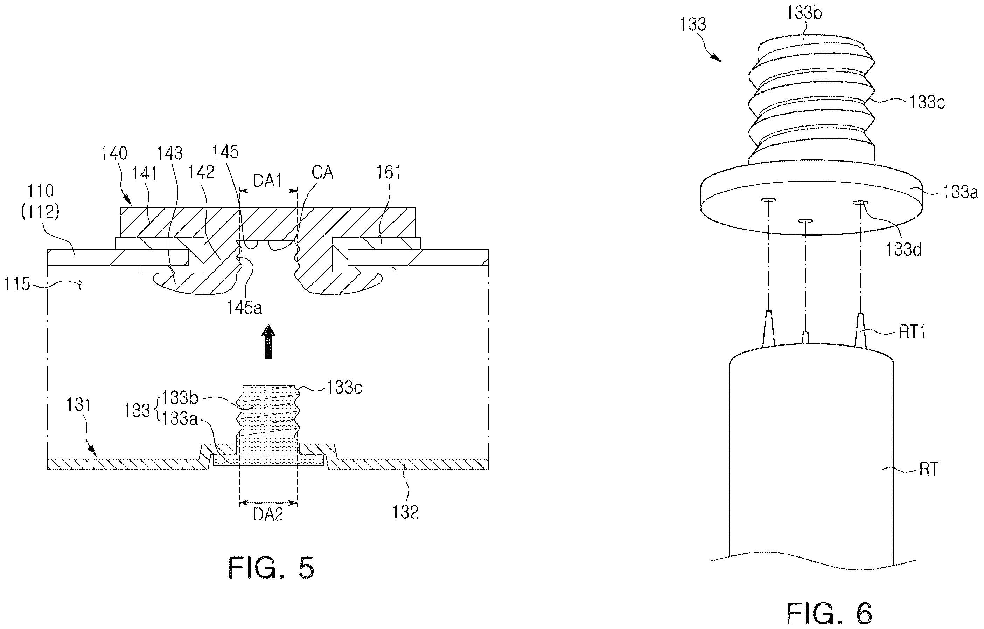

FIG. 5 is a cross-sectional view illustrating a state before the electrode terminal (140) and the first current collector (131) are coupled.

Referring to FIG. 5, the electrode terminal (140) may be coupled to the top plate (112) of the cell case (110). The electrode terminal (140) and the cell case (110) may be sealed and insulated by the first gasket (161).

The electrode terminal (140) may include a first portion (141) disposed on the top side of the top plate (112), a second portion (142) extending from the first portion (141) to the bottom side and passing through the through-hole (113), and a third portion (143) extending from the second portion (142) and disposed on the bottom side of the top plate (112). A coupling groove (145) sunken into the top side may be formed at the bottom of the electrode terminal (140). A second screw thread (145a) may be formed on the inner side surface of the coupling groove (145). A contact surface (CA) may be formed on the inner top surface of the coupling groove (145).

The first current collector (131) may include a connection terminal (133) and a current collecting plate (132). The connection terminal (133) may include a support portion (133a) and a protrusion (133b). The protrusion (133b) may have a first screw thread (133c) formed on a side surface.

The first current collector (131) may be inserted into the accommodation space (115) of the cell case (110) and may move toward the electrode terminal (140). The connection terminal (133) may be screw-coupled to the electrode terminal (140) by relative rotation between the connection terminal (133) and the electrode terminal (140). The first current collector (131) and electrode terminal (140) may be electrically connected by the screw coupling of the first screw thread (133c) and the second screw thread (145a).

In a preferred embodiment, the first screw thread (133c) of the connection terminal (133) and the second screw thread (145a) of the coupling groove (145) may be coupled while being pressed against each other. For example, the protrusion (133b) of the connection terminal (133) may be forcibly fitted into the coupling groove (145) of the electrode terminal (140). Accordingly, loosening of the screw-coupling between the connection terminal (133) and the electrode terminal (140) may be prevented, and the coupling between the electrode terminal (140) and the first current collector (131) may be stably maintained. However, the present disclosure is not limited to a structure in which the first screw thread (133c) and the second screw thread (145a) of the coupling groove (145) are coupled while being pressed against each other.

The average diameter (DA2) of the first screw thread (133c) may have a value equal to or greater than the average diameter (DA1) of the second screw thread (145a). In this case, the average diameter (DA2) of the first screw thread (133c) and the average diameter (DA1) of the second screw thread (145a) may be defined as the average values of the diameters of the mountain portion and the valley portion.

When the average diameter (DA2) of the first screw thread (133c) formed in the protrusion (133b) has a value greater than or equal to the average diameter (DA1) of the second screw thread (145a) formed in the coupling groove (145), the first screw thread (133c) and the second screw thread (145a) are coupled in a pressurized state, so that loosening may be prevented or limited even in a situation in which an impact or vibrations occur. Accordingly, the connection between the electrode terminal (140) and the first current collector (131) may be stably maintained.

The size, pitch, and shape of the first screw thread (133c) and the second screw thread (145a) may be variously changed in consideration of the bonding force and/or the pressing force of the screw joint.

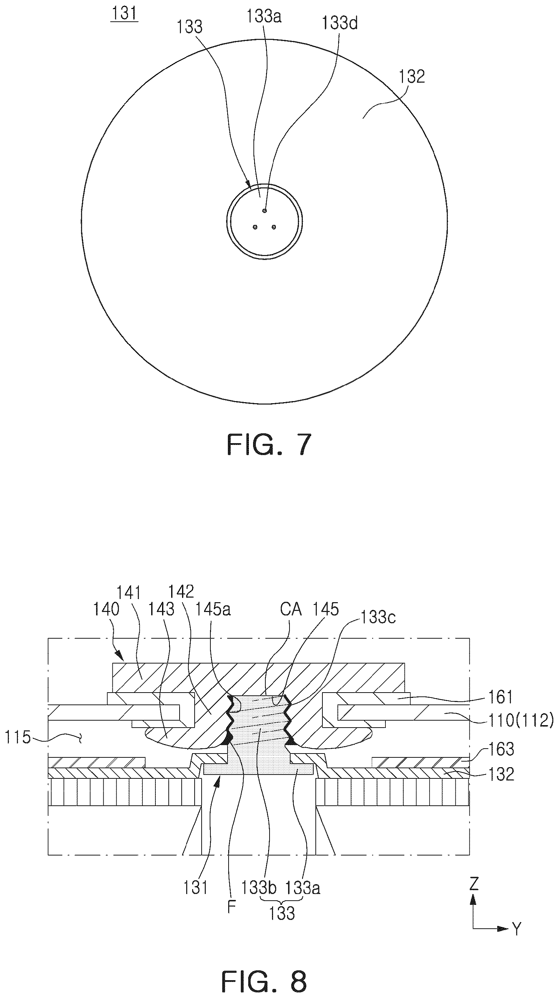

FIG. 6 is a perspective view illustrating a connection terminal (133) and an installation tool (RT). FIG. 7 is a bottom view illustrating a bottom surface of the first current collector (131). FIG. 7 illustrates a state in which a current collecting plate (132) and a connection terminal (133) are coupled.

Referring to FIGS. 6 and 7, the first current collector (131) may include a support groove (133d) formed on the bottom surface of the first current collector (131). For example, the support groove (133d) may be formed on the bottom surface of the connection terminal (133). The support groove (133d) may support the installation tool (RT) during relative rotation between the connection terminal (133) and the electrode terminal (140). The support groove (133d) may include a plurality of grooves, and the installation tool (RT) may include an insertion protrusion (RT1) inserted into each groove. The number of support grooves (133d) is not limited to a specific number, and various changes are possible as long as the rotation of the installation tool (RT) may be prevented. For example, the support groove (133d) may be configured as a single groove having a rotation-preventing shape such as a prismatic, straight, or cross shape.

When the connection terminal (133) rotates while the electrode terminal (140) is fixed, the installation tool (RT) may be configured as a rotating tool. When the installation tool (RT) is rotated while the insertion protrusion (RT1) of the installation tool (RT) is supported by the support groove (133d), the first current collector (131) and the connection terminal (133) may be easily rotated. In contrast, when the cell case (110) and the electrode terminal (140) rotate, the installation tool (RT) may be configured as a rotation-limiting tool that limits the rotation of the connection terminal (133).

When a support groove (133d) is formed in the first current collector (131), the relative rotation of the electrode terminal (140) and the connection terminal (133) may be easily implemented, so that the electrode terminal (140) and the connection terminal (133) may be easily coupled. Accordingly, the electrical connection process between the electrode terminal (140) and the first current collector (131) may be simplified.

FIG. 8 is a cross-sectional view illustrating a modified embodiment of the battery cell (100) illustrated in FIG. 4.

Compared to the battery cell (100) illustrated in FIGS. 1 to 4, the battery cell (100) illustrated in FIG. 8 is different in that a loosening prevention member (F) is disposed between the coupling groove (145) of the electrode terminal (140) and the protrusion (133b) of the connection terminal (133). The contents of the descriptions of FIGS. 1 to 4, excluding the differences, may also be applied to FIG. 8.

A loosening prevention member (F) may be disposed between the first screw thread (133c) of the connection terminal (133) and the second screw thread (145a) of the coupling groove (145) to prevent the screw-coupling from loosening. The loosening prevention member (F) may prevent loosening of a screw-coupling between the first screw thread (133c) and the second screw thread (145a). As an example, the loosening prevention member (F) may include an adhesive or a Loctite capsule. The adhesive may have various states such as solid or liquid, and the shape or material thereof may be changed in various ways.

The loosening prevention member (F) may be applied or disposed on at least one of the first screw thread (133c) or the second screw thread (145a) before the screw connection between the electrode terminal (140) and the connection terminal (133). Alternatively, the loosening prevention member (F) may be injected between the first screw thread (133c) or the second screw thread (145a) after the screw connection between the electrode terminal (140) and the connection terminal (133).

Since the loosening prevention member (F) may prevent the loosening of the screw-coupling between the first screw thread (133c) and the second screw thread (145a) even in a situation in which impact or vibration occurs, the connection between the electrode terminal (140) and the first current collector (131) may be stably maintained.

FIG. 9 is a perspective view illustrating a modified embodiment of the first current collector (131).

As illustrated in FIG. 9, the first current collector (131) may include a current collecting plate (132) and a connection terminal (133). The current collecting plate (132) may have a plate shape that is relatively thin, as compared to the connection terminal (133), and the connection terminal (133) may have a cylindrical shape that is relatively thick compared to the current collecting plate (132). A first screw thread (133c) may be formed on the side surface of the connection terminal (133).

The current collecting plate (132) and the connection terminal (133) may be formed integrally. For example, the first current collector (131) may be formed integrally with the current collecting plate (132) and the connection terminal (133) through forging processing, or the like. When performing forging, a thin current collector plate (132) and a relatively thick connection terminal (133) may be easily formed as one piece.

FIG. 10 is a cross-sectional view illustrating a state in which the first current collector (131) illustrated in FIG. 9 is applied to the cross-section of FIG. 4.

Compared to the battery cell (100) illustrated in FIG. 1 to FIG. 4, the battery cell (100) illustrated in FIG. 10 is different only in that the current collector plate (132) and the connection terminal (133) of the first current collector (131) have an integrated structure. The contents of the descriptions of FIG. 1 to FIG. 4, excluding the differences, may also be applied to FIG. 10.

Referring to FIG. 10, the current collecting plate (132) of the integrated first current collector (131) is electrically connected to the first electrode tab (121a), and the connection terminal (133) may be fitted into the coupling groove (145) of the electrode terminal (140).

In the embodiment of FIG. 10, the connection terminal (133) corresponds to the protrusion (133b), and the support portion (133a of FIG. 4) may have a shape formed integrally with the current collecting plate

(132). In the embodiment of FIG. 10, the thickness or height (T2 of FIG. 4) of the connection terminal (133) may be defined as the overall thickness or overall height of the first current collector (131).

The protrusion (133b) of the connection terminal (133) may be screw-coupled to the coupling groove (145) of the electrode terminal (140). The first screw thread (133c) of the protrusion (133b) and the second screw thread (145a)of the coupling groove (145) are screw-coupled to electrically connect the connection terminal (133) and the electrode terminal (140).

The protrusion (133b) of the connection terminal (133) may contact the contact surface (CA) formed on the inner top surface of the coupling groove (145). In this case, an electrical connection between the connection terminal (133) and the electrode terminal (140) may also be made through the contact surface (CA).

FIG. 11 is a cross-sectional view illustrating a modified embodiment of the battery cell (100) of FIG. 3.

Compared to the embodiments of FIGS. 1 to 4, the battery cell (100) illustrated in FIG. 11 differs only in the structure of the cell case (110). The contents of the descriptions of FIGS. 1 to 4, excluding the differences, may also be applied to the battery cell (100) of FIG. 11, and the differences will be described based thereon.

In the battery cell (100) illustrated in FIG. 11, the cell case (110) may include a side wall (111) and a top plate (112). In the embodiment of FIG. 11, the top plate (112) may be defined as a plate to which the electrode terminal (140) is coupled.

The side wall (111) may have a tube shape, and the top plate (112) may have a plate shape covering the top side of the accommodation space (115). The side wall (111) and the top plate (112) may not be formed integrally but may have a separate structure. In the embodiment of FIG. 11, the side wall (111) and the top plate (112) may be coupled to each other by welding.

The cell case (110) of the present disclosure may be applied not only to a case in which the side wall (111) and the top plate (112) have an integral structure, but also to a case in which the side wall (111) and the top plate (112) have a separate structure, as in the embodiment illustrated in FIG. 11. For example, the embodiment of FIG. 11 may be applied to a case in which it is difficult to manufacture an integral cell case (110) by deep drawing due to an increase in the height of the side wall (111), or the like.

FIG. 12 is a cross-sectional view illustrating another modified embodiment of the battery cell (100) of FIG. 3.

Compared to the embodiments of FIGS. 1 to 4, the battery cell (100) illustrated in FIG. 12 has a difference in the bonding structure between the cap plate (150) and the side wall (111) of the cell case (110). The contents of the descriptions of FIGS. 1 to 4, excluding the differences, may also be applied to the battery cell (100) of FIG. 12, and the differences will be described.

The battery cell (100) illustrated in FIG. 12 may include a cell case (110), an electrode terminal (140), an electrode assembly (120), and a first current collector (131), and may additionally include a cap plate (150) covering the bottom side of the accommodation space (115) of the cell case (110).

The cap plate (150) may cover the accommodation space (115) on the opposite side to the electrode terminal (140). The cap plate (150) may be welded to the cell case (110). The cap plate (150) may be coupled to the side wall (111) of the cell case (110) by welding. The cap plate (150) may be welded so that the perimeter of the body (151) comes into contact with the end (111a) of the side wall (111).

In the embodiment of FIG. 12, the cap plate (150) may be electrically connected to the second electrode tab (122a). The cap plate (150) may be coupled to the second electrode tab (122a) by welding or the like to be electrically connected to the second electrode tab (122a). Alternatively, the cap plate (150) may be electrically connected to the second electrode tab (122a) by pressing the second electrode tab (122a) so that it comes into contact with the second electrode tab (122a). If the second electrode tab (122a) is directly electrically connected to the cap plate (150), it is also possible that the second current collector (135 in FIG. 4) may not be disposed.

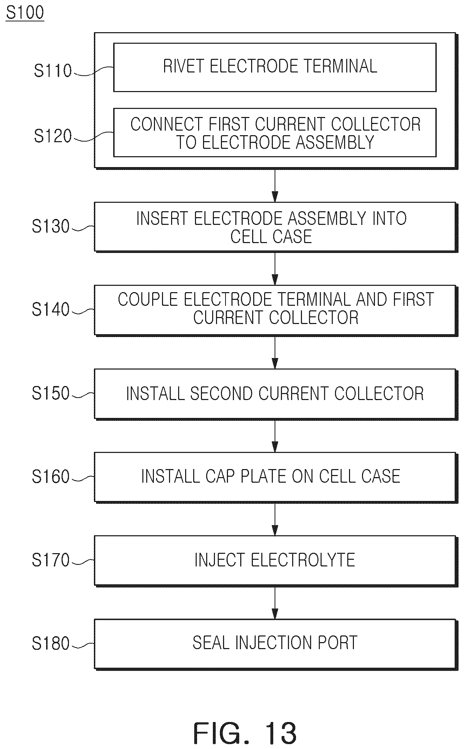

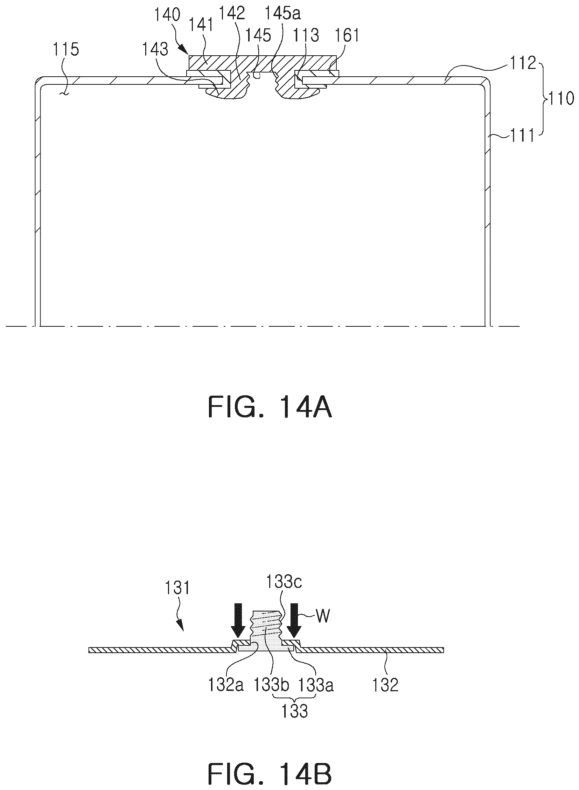

FIG. 13 is a flow chart illustrating a method (S100) for manufacturing a battery cell (100) according to a preferred embodiment. FIGS. 14A to 14E are cross-sectional views illustrating a method (S100) for manufacturing a battery cell (100). FIGS. 14A to 14E illustrate, as an example, a method (S100) for manufacturing a battery cell (100) illustrated in FIGS. 1 to 4.

Referring to FIG. 13 together with FIGS. 1 to 4, a method (S100) for manufacturing a battery cell (100) according to a preferred embodiment may include an operation (S110) of riveting an electrode terminal (140) to a through-hole (113) formed in a top plate (112) of a cell case (110) having an open bottom side, an operation (S120) of electrically connecting a first current collector (131) to an electrode assembly (120), an operation (S130) of inserting the electrode assembly (120) into an accommodation space (115) of the cell case (110), and a coupling operation (S140) of coupling the electrode terminal (140) and the first current collector (131). The first current collector (131) may include a connection terminal (133) having a protrusion (133b) that is screw-coupled to a coupling groove (145) of an electrode terminal (140), and the coupling groove (145) may include a second screw thread (145a) that is connected to a first screw thread (133c) formed on an outer peripheral surface of the protrusion (133b). The coupling operation (S140) may be performed by screw-connecting the electrode terminal (140) and the protrusion (133b) through relative rotation thereof.

Referring to FIGS. 13 to 14e together with FIGS. 1 to 4, a method of manufacturing a battery cell (100) (S100) will be described. The description of the battery cell (100) described with reference to FIGS. 1 to 12 may also be applied to a method of manufacturing a battery cell (100) (S100).

Referring to FIG. 14A, the cell case (110) includes a side wall (111) and a top plate (112), and a through-hole (113) may be formed in the top plate (112). In the operation of riveting the electrode terminal (140) (S110), the electrode terminal (140) may be inserted into the through-hole (113) from the outside of the top plate (112). The first portion (141) of the electrode terminal (140) is disposed on the outside of the top plate (112), and the second portion (142) and the third portion (143) may be inserted into the through-hole (113). The third portion (143) is deformed radially outwardly by riveting, and the electrode terminal (140) may be fixed to the top plate (112).

If the riveting is performed while the first gasket (161) is disposed on the outside of the electrode terminal (140), the first gasket (161) may be disposed between the electrode terminal (140) and the top plate (112). The first gasket (161) may seal and/or insulate between the electrode terminal (140) and the top plate (112).

The operation (S120) of electrically connecting the first current collector (131) may include a process of preparing the first current collector (131).

Referring to FIG. 14B, the first current collector (131) may include a connection terminal (133) having a protrusion (133b) that is fitted into a coupling groove (145). The first current collector (131) may additionally include a current collecting plate (132) that electrically connects the first electrode tab (121a) of the electrode assembly (120) and the connection terminal (133). For example, the first current collector (131) may include a current collecting plate (132) and a connection terminal (133). The connection terminal (133) may include a support portion (133a) that is coupled to the current collecting plate (132) and a protrusion (133b) that extends from the support portion (133a) to the top side. The protrusion (133b) may include a second screw thread (145a) formed on the outer peripheral surface.

The current collecting plate (132) and the connection terminal (133) may be manufactured separately and then coupled by welding. Since the current collecting plate (132) has a relatively thin plate shape compared to the connection terminal (133), and the connection terminal (133) has a relatively thick cylindrical shape compared to the current collecting plate (132), if the current collecting plate (132) and the connection terminal (133) are manufactured separately, respective manufacturing thereof may be easily manufactured.

The connection terminal (133) may be coupled to the current collecting plate (132) in a state where the protrusion (133b) is disposed to pass through the opening (132a) of the current collecting plate (132). For example, the connection terminal (133) and the current collecting plate (132) may be joined by welding.

Meanwhile, as in the embodiments illustrated in FIGS. 9 and 10, the current collector plate (132) and the connection terminal (133) may be formed integrally by forging. When the current collector plate (132) and the connection terminal (133) are formed integrally, the process of combining the connection terminal (133) and the current collector plate (132) may be omitted, thereby simplifying the assembly process of the battery cell (100).

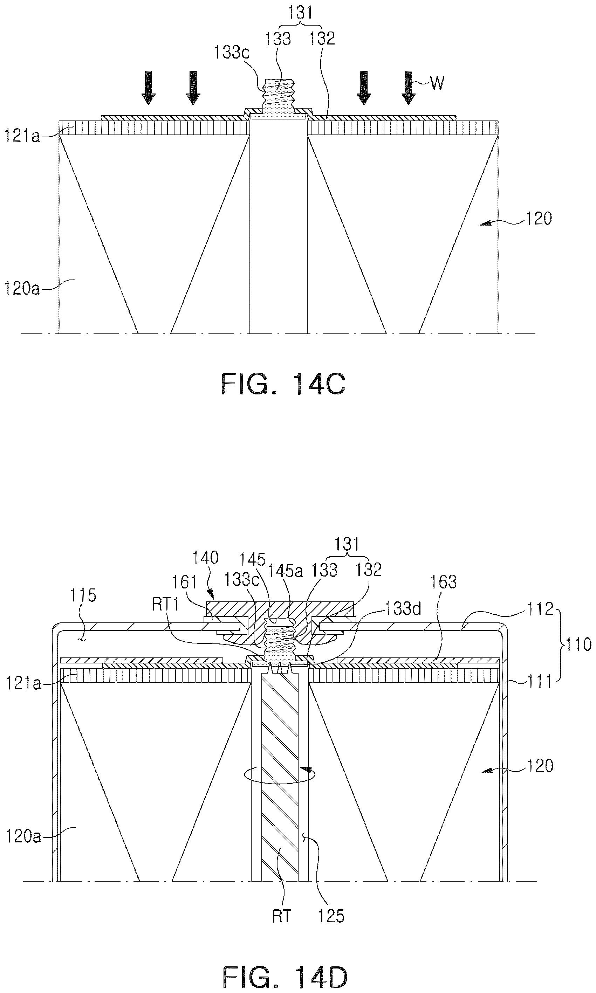

Referring to FIG. 14C, the operation (S120) of electrically connecting the first current collector (131) to the electrode assembly (120) may include a process of electrically connecting the first current collector (131) to the first electrode tab (121a) of the electrode assembly (120). The first current collector (131) may be welded to the first electrode tab (121a). For example, the first current collector (131) may be ultrasonically welded, laser welded, or resistance welded to the first electrode tab (121a).

The order of the operation (S110) of riveting the electrode terminal (140) to the through-hole (113) formed in the top plate (112) and the operation (S120) of electrically connecting the first current collector (131) to the electrode assembly (120) may be changed or performed in parallel.

Referring to FIG. 14D together with FIG. 4, the operation (S130) of inserting the electrode assembly (120) into the accommodation space (115) of the cell case (110) may be performed by inserting the electrode assembly (120) into the cell case (110) through the open bottom of the cell case (110). The electrode assembly (120) may be inserted into the cell case (110) in a state where the first current collector (131) is disposed to face the bottom of the electrode terminal (140). An insulating member (163) may be disposed between the top plate (112) and the first current collector (131). Before accommodating the electrode assembly (120) into the cell case (110), the electrode assembly (120) may have a state in which the first current collector (131) is connected to the first electrode tab (121a), and the cell case (110) may have an electrode terminal (140) riveted to the top plate (112).

When the electrode assembly (120) is inserted into the cell case (110), the protrusion (133b) of the first current collector (131) may enter toward the coupling groove (145) formed at the bottom of the electrode terminal (140).

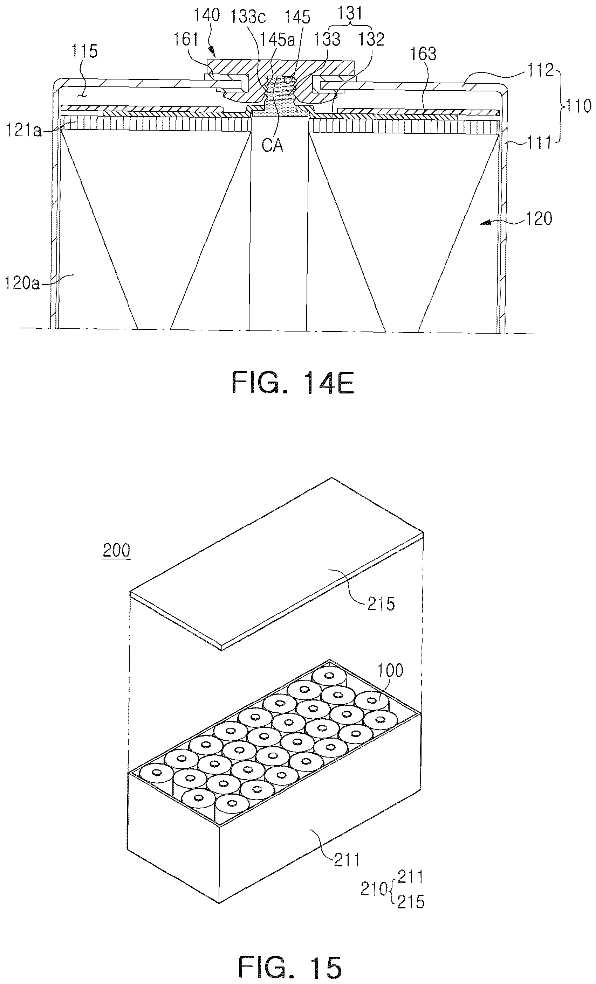

FIG. 14D illustrates a state in which a part of the protrusion (133b) is screw-coupled to the coupling groove (145) at the beginning of the coupling operation (S140), and illustrates a state in which the installation tool (RT) has entered the hollow portion (125) of the electrode assembly (120). FIG. 14E illustrates a state in which the coupling operation (S140) is completed and an installation tool (RT) is removed.

Referring to FIG. 14D and FIG. 14E together with FIG. 4, the coupling operation (S140) may join the electrode terminal (140) and the first current collector (131). The coupling operation (S140) may screw-join the electrode terminal (140) and the protrusion (133b) by relatively rotating the electrode terminal (140) and the protrusion (133b).

According to a preferred embodiment, since the electrode terminal (140) and the first current collector (131) may be electrically connected by screw-coupling rather than welding, defects caused by foreign substances generated during the welding of the electrode terminal (140) and the first current collector (131) may be reduced or prevented. According to a preferred embodiment, since the electrode terminal (140) and the first current collector (131) may be electrically connected by screw coupling, the electrical connection process between the electrode terminal (140) and the first current collector (131) may be simplified.

The coupling operation (S140) may be performed by inserting an installation tool (RT) into a hollow portion (125) formed in the center of the electrode assembly (120) to relatively rotate the electrode terminal (140) and the protrusion (133b).

The first current collector (131) may include a support groove (133d) formed on the bottom surface of the connection terminal (133). The coupling operation (S140) may be performed while the installation tool (RT) is supported by the support groove (133d).

When the connection terminal (133) rotates while the electrode terminal (140) is fixed, the installation tool (RT) may be configured as a rotating tool. When the installation tool (RT) is rotated while the insertion protrusion (RT1) of the installation tool (RT) is supported by the support groove (133d), the first current collector (131) and the connection terminal (133) may be easily rotated. In contrast, when the cell case (110) and the electrode terminal (140) are rotated, the installation tool (RT) may be configured as a rotation-limiting tool that limits the rotation of the connection terminal (133).

Referring again to FIG. 13, the method (S100) for manufacturing a battery cell (100) according to a preferred embodiment includes an operation (S150) of installing a second current collector (135). The second current collector (135) may be electrically connected to the second electrode tab (122a) of the electrode assembly

(120). The second current collector (135) may be welded to the second electrode tab (122a), but may also be electrically connected while in contact with the second electrode tab (122a). The operation (S150) of disposing the second current collector (135) may be performed before the operation (S130) of inserting the electrode assembly (120) into the cell case (110), or may be performed after the operation (S140) of connecting the electrode terminal (140) and the first current collector (131). Meanwhile, in the case where the second electrode tab (122a) and the cap plate (150) are directly electrically connected, the operation (S150) of disposing the second current collector (135) may not be performed.

The method of manufacturing a battery cell (100) according to a preferred embodiment (S100) may additionally include an operation (S160) of installing a cap plate (150) on an open bottom side of a cell case (110). The operation (S160) of installing the cap plate (150) may be to crimp or weld the cap plate (150) to the cell case (110). For example, as illustrated in FIG. 3, the cap plate (150) may be coupled to the end (111a) of the side wall (111) through a beading process and a crimping process. Alternatively, as illustrated in FIG. 14, the cap plate (150) may be coupled to the end (111a) of the side wall (111) by welding.

The method of manufacturing a battery cell (100) according to a preferred embodiment (S100) may additionally include an operation (S170) of injecting an electrolyte. The electrolyte injection may be performed through an injection port (152) formed in at least one of the cap plate (150), the electrode terminal (140), or the cell case (110). For example, the electrolyte may be injected into the accommodation space (115) of the cell case (110) through the injection port (152) formed in the cap plate (150).

After the operation of injecting the electrolyte (S170) is performed, the injection port sealing operation (S180) may be performed. The injection port sealing operation (S180) may seal the injection port (152) with an injection port plug (153).

Then, a subsequent process such as a chemical reaction process may be performed.

Meanwhile, the method of manufacturing a battery cell (100) (S100) is only an example, and the order may be changed, some steps may not be performed, or additional steps may be performed in the middle depending on the shape or structure of the battery cell (100).

FIG. 15 is a perspective view of a battery module (200) according to a preferred embodiment.

Referring to FIG. 15, a battery module (200) according to a preferred embodiment may include a plurality of battery cells (100) and a module housing (210) accommodating the plurality of battery cells (100).

The battery cells (100) provided in the battery module (200) may be applied to at least one of the battery cells (100) described with reference to FIGS. 1 to 12.

If the battery module (200) of the present disclosure includes a plurality of battery cells (100), the specific type thereof is not limited. For example, the battery module (200) of the present disclosure is defined as including all of a battery pack or an energy storage device.

The plurality of battery cells (100) may be accommodated in the module housing (210).

The module housing (210) may provide a space accommodating the plurality of battery cells (100). The module housing (210) may include a housing body (211) that forms a space for accommodating a plurality of battery cells (100) and a housing cover (215) that covers the top side of the plurality of battery cells (100).

As set forth above, according to a preferred embodiment, a defect caused by foreign matter occurring when coupling an electrode terminal and a first current collector may be improved.

According to a preferred embodiment, an electrode terminal and a first current collector may be electrically connected without welding. Therefore, foreign matter (impurity) caused by welding of the electrode terminal and the first current collector may be prevented from affecting an internal configuration of a battery cell. In addition, an electrode assembly may be prevented from being damaged by welding heat.

According to a preferred embodiment, an electrical connection process between an electrode terminal and a first current collector may be simplified.

According to a preferred embodiment, the coupling between the electrode terminal and the first current collector may be stably maintained.

According to a preferred embodiment, the rigidity of an electrode terminal may be improved.

(Aspect 1) A battery cell comprising: a cell case including a side wall forming an accommodation space therein and a top plate having a through-hole formed therein; an electrode terminal coupled to the through-hole and having a coupling groove formed in a bottom portion of the electrode terminal; an electrode assembly disposed in the accommodation space of the cell case; and a first current collector electrically connecting the electrode terminal and the electrode assembly, wherein the first current collector includes a connection terminal having a protrusion screw-coupled to the coupling groove, and the coupling groove includes a second screw thread coupled to a first screw thread formed on an outer peripheral surface of the protrusion.

(Aspect 2) The battery cell of aspect 1, wherein the protrusion of the connection terminal is configured to move along an axial direction of the cell case by a relative rotation of the first screw thread and the second screw thread and is coupled to the coupling groove of the electrode terminal.

(Aspect 3) The battery cell of aspect 1 or aspect 2, wherein the first current collector includes a support groove formed on a bottom surface, and the support groove supports an installation tool during a relative rotation between the connection terminal and the electrode terminal.

(Aspect 4) The battery cell of any one of aspects 1 to 3, wherein the coupling groove of the electrode terminal includes a contact surface on an inner top surface thereof, contacting the connection terminal, and the connection terminal is disposed to contact the contact surface.

(Aspect 5) The battery cell of any one of aspects 1 to 4, having one or more of the following characteristics (i) to (v), respectively alone or in combination: (i) a thickness of the connection terminal at a connection portion between the electrode terminal and the connection terminal has a value greater than or equal to a thickness of the electrode terminal, (ii) the first screw thread of the connection terminal and the second screw thread of the coupling groove are coupled to each other in a pressurized state, (iii) an average diameter of the first screw thread has a value equal to or greater than an average diameter of the second screw thread, (iv) the first screw thread of the connection terminal and the second screw thread of the coupling groove are provided with a loosening prevention member therebetween preventing loosening of a screw-coupling, and/or (v) the protrusion is provided as a solid type, an internal portion of which is filled.

(Aspect 6) The battery cell of any one of aspects 1 to 5, wherein the first current collector further includes a current collecting plate electrically connected to a first electrode tab of the electrode assembly, and the current collecting plate is connected to the connection terminal, preferably the current collecting plate and the connection terminal are formed integrally.

(Aspect 7) The battery cell of aspect 6, wherein the connection terminal further includes a support portion coupled to the current collecting plate, and the protrusion extends from the support portion and has a shape passing through an opening formed in the current collecting plate.

(Aspect 8) The battery cell of any one of aspects 1 to 7, wherein the cell case has a circular cross-sectional shape, the through-hole is formed in a center of the top plate, and the electrode terminal is riveted to the through-hole of the cell case.

(Aspect 9) The battery cell of any one of aspects 1 to 8, wherein the side wall has a tube shape, and the top plate has a plate shape covering a top side of the accommodation space of the cell case, wherein the side wall and the top plate are formed integrally.

(Aspect 10) The battery cell of any one of aspects 1 to 9, further comprising a cap plate covering a bottom side of the accommodation space of the cell case, wherein the cap plate is crimping-coupled or welded to the cell case.

(Aspect 11) A method of manufacturing a battery cell, comprising: riveting an electrode terminal to a through-hole formed in a top plate of a cell case having an open bottom side; electrically connecting a first current collector to an electrode assembly; inserting the electrode assembly into an accommodation space of the cell case; and coupling the electrode terminal and the first current collector, wherein the first current collector includes a connection terminal having a protrusion screw-coupled to a coupling groove of the electrode terminal, the coupling groove includes a second screw thread to which a first screw thread formed on an outer peripheral surface of the protrusion is coupled, and the coupling is performed by screw-coupling the electrode terminal and the protrusion by relatively rotating the electrode terminal and the protrusion.

(Aspect 12) The method of aspect 11, wherein the coupling is performed by inserting an installation tool into a hollow portion formed in a center of the electrode assembly to relatively rotate the electrode terminal and the protrusion.

(Aspect 13) The method of aspect 12, wherein the first current collector includes a support groove formed in a bottom surface, and the coupling is performed in a state where the installation tool is supported by the support groove.

(Aspect 14) The method of any one of aspects 16 to 18, wherein the first current collector further includes a current collecting plate electrically connecting a first electrode tab of the electrode assembly and the connection terminal, and the current collecting plate and the connection terminal are manufactured separately and then coupled by welding or are formed integrally by forging.

(Aspect 15) A battery module comprising: a plurality of battery cells; and a module housing accommodating the plurality of battery cells, wherein at least one of the plurality of battery cells includes, a cell case including a side wall forming an accommodation space therein and a top plate having a through-hole formed therein; an electrode terminal coupled to the through-hole and having a coupling groove formed in a bottom portion of the electrode terminal; an electrode assembly disposed in the accommodation space of the cell case; and a first current collector electrically connecting the electrode terminal and the electrode assembly, wherein the first current collector includes a connection terminal having a protrusion screw-coupled to the coupling groove, and the coupling groove includes a second screw thread coupled to a first screw thread formed on an outer peripheral surface of the protrusion.

## Claims

1. A battery cell comprising:
a cell case including a side wall forming an accommodation space therein and a top plate having a through-hole formed therein;
an electrode terminal coupled to the through-hole and having a coupling groove formed in a bottom portion of the electrode terminal;
an electrode assembly disposed in the accommodation space of the cell case; and
a first current collector electrically connecting the electrode terminal and the electrode assembly,
wherein the first current collector includes a connection terminal having a protrusion screw-coupled to the coupling groove, and
the coupling groove includes a second screw thread coupled to a first screw thread formed on an outer peripheral surface of the protrusion.

2. The battery cell of claim 1, wherein the protrusion of the connection terminal is configured to move along an axial direction of the cell case by a relative rotation of the first screw thread and the second screw thread and is coupled to the coupling groove of the electrode terminal.

3. The battery cell of claim 1 or claim 2, wherein the first current collector includes a support groove formed on a bottom surface, and
the support groove supports an installation tool during a relative rotation between the connection terminal and the electrode terminal.

4. The battery cell of any one of claims 1 to 3, wherein the coupling groove of the electrode terminal includes a contact surface on an inner top surface thereof, contacting the connection terminal, and
the connection terminal is disposed to contact the contact surface.

5. The battery cell of any one of claims 1 to 4, having one or more of the following characteristics (i) to (v), respectively alone or in combination:
(i) a thickness of the connection terminal at a connection portion between the electrode terminal and the connection terminal has a value greater than or equal to a thickness of the electrode terminal,
(ii) the first screw thread of the connection terminal and the second screw thread of the coupling groove are coupled to each other in a pressurized state,
(iii) an average diameter of the first screw thread has a value equal to or greater than an average diameter of the second screw thread,
(iv) the first screw thread of the connection terminal and the second screw thread of the coupling groove are provided with a loosening prevention member therebetween preventing loosening of a screw-coupling, and/or
(v) the protrusion is provided as a solid type, an internal portion of which is filled.

6. The battery cell of any one of claims 1 to 5, wherein the first current collector further includes a current collecting plate electrically connected to a first electrode tab of the electrode assembly, and the current collecting plate is connected to the connection terminal,
preferably the current collecting plate and the connection terminal are formed integrally.

7. The battery cell of claim 6, wherein the connection terminal further includes a support portion coupled to the current collecting plate, and
the protrusion extends from the support portion and has a shape passing through an opening formed in the current collecting plate.

8. The battery cell of any one of claims 1 to 7, wherein the cell case has a circular cross-sectional shape,
the through-hole is formed in a center of the top plate, and
the electrode terminal is riveted to the through-hole of the cell case.

9. The battery cell of any one of claims 1 to 8, wherein the side wall has a tube shape, and the top plate has a plate shape covering a top side of the accommodation space of the cell case,
wherein the side wall and the top plate are formed integrally.

10. The battery cell of any one of claims 1 to 9, further comprising a cap plate covering a bottom side of the accommodation space of the cell case,
wherein the cap plate is crimping-coupled or welded to the cell case.

11. A method of manufacturing a battery cell, comprising:
riveting an electrode terminal to a through-hole formed in a top plate of a cell case having an open bottom side;
electrically connecting a first current collector to an electrode assembly;
inserting the electrode assembly into an accommodation space of the cell case; and
coupling the electrode terminal and the first current collector,
wherein the first current collector includes a connection terminal having a protrusion screw-coupled to a coupling groove of the electrode terminal,
the coupling groove includes a second screw thread to which a first screw thread formed on an outer peripheral surface of the protrusion is coupled, and
the coupling is performed by screw-coupling the electrode terminal and the protrusion by relatively rotating the electrode terminal and the protrusion.

12. The method of claim 11, wherein the coupling is performed by inserting an installation tool into a hollow portion formed in a center of the electrode assembly to relatively rotate the electrode terminal and the protrusion.

13. The method of claim 12, wherein the first current collector includes a support groove formed in a bottom surface, and
the coupling is performed in a state where the installation tool is supported by the support groove.

14. The method of any one of claims 11 to 13, wherein the first current collector further includes a current collecting plate electrically connecting a first electrode tab of the electrode assembly and the connection terminal, and
the current collecting plate and the connection terminal are manufactured separately and then coupled by welding or are formed integrally by forging.

15. A battery module comprising:
a plurality of battery cells; and
a module housing accommodating the plurality of battery cells,
wherein at least one of the plurality of battery cells includes,
a cell case including a side wall forming an accommodation space therein and a top plate having a through-hole formed therein;
an electrode terminal coupled to the through-hole and having a coupling groove formed in a bottom portion of the electrode terminal;
an electrode assembly disposed in the accommodation space of the cell case; and
a first current collector electrically connecting the electrode terminal and the electrode assembly,
wherein the first current collector includes a connection terminal having a protrusion screw-coupled to the coupling groove, and
the coupling groove includes a second screw thread coupled to a first screw thread formed on an outer peripheral surface of the protrusion.
